# EUROPÄISCHE PATENTANMELDUNG

(11) **EP 1 950 876 A2**
(43) Veröffentlichungstag der Anmeldung: **30.07.2008**
(21) Anmeldenummer: 07122445.5
(22) Anmeldetag: 06.12.2007
(51) Int. Cl.: H02M 7/757

(54) **Wechselrichter**

(30) Priorität: 23.01.2007 AT 1092007
(71) Anmelder: Siemens AG Österreich, 1210 Wien (AT)
(72) Erfinder: Hallak, Jalal, 1220, Wien (AT)

(57) **Zusammenfassung**

Wechselrichter mit einer vier Schaltelemente (S1, S2, S3, S4) aufweisenden Brückenschaltung, bei der zwei gegenüber liegende Anschlussklemmen (1, 2) der Brückenschaltung mit dem Gleichspannungsteil des Wechselrichters verbunden sind, und die beiden anderen Anschlussklemmen (3, 4) der Brückenschaltung mit dem Wechselspannungsteil des Wechselrichters verbunden sind, wobei durch geeignete Ansteuerung der Schaltelemente (S1, S2, S3, S4) Gleich- und Wechselspannung ineinander umwandelbar sind. Erfindungsgemäß ist vorgesehen, dass im Wechselspannungsteil eine wechselspannungsseitige Induktivität (L_{S}) geschalten ist, und im Gleichspannungsteil an der positiven Gleichspannungsklemme eine gleichspannungsseitige Induktivität (L_{P}) angekoppelt ist, der ein zwischen der gleichspannungsseitigen Induktivität (L_{P}) und der Brückenschaltung in Serie geschalteter Ladekondensator (C) nachgeordnet ist, wobei in der Reihenschaltung zwischen der gleichspannungsseitigen Induktivität (L_{P}) und dem Ladekondensator (C) einerseits, sowie der negativen Gleichspannungsklemme des Gleichspannungsteils andererseits ein weiteres Schaltelement (S5) geschalten ist, das im geschlossenen Zustand die mit der positiven Gleichspannungsklemme verbundene Seite des Ladekondensators (C) mit der negativen Gleichspannungsklemme verbindet.

## Beschreibung

Die Erfindung betrifft einen Wechselrichter mit einer vier Schaltelemente aufweisenden Brückenschaltung, bei der zwei gegenüber liegende Anschlussklemmen der Brückenschaltung mit dem Gleichspannungsteil des Wechselrichters verbunden sind, und die beiden anderen Anschlussklemmen der Brückenschaltung mit dem Wechselspannungsteil des Wechselrichters verbunden sind, wobei durch geeignete Ansteuerung der Schaltelemente Gleich- und Wechselspannung ineinander umwandelbar sind, gemäß dem Oberbegriff von Anspruch 1 und 2.

Wechselrichter finden in der Elektrotechnik breite Anwendung, insbesondere in alternativen Stromerzeugungssystemen wie etwa Brennstoffzellenanlangen und Photovoltaikanlagen (sogenannte "ruhende Systeme"), oder Windkraftanlagen (sogenannte "rotierende Systeme"). Ruhende Systeme benötigen zur Leistungseinspeisung in ein Stromversorgungsnetz einen Wechselrichter, der die anfallende DC-Leistung in eine AC-Leistung umwandelt und netzkonform einspeist. Rotierende Systeme erzeugen AC-Leistung, die aber in der Regel zunächst in eine DC-Leistung umgewandelt wird, und anschließend in eine AC-Leistung rückgewandelt wird, einerseits, um den Arbeitsbereich (z.B. Drehzahlbereich) auf der mechansichen Seite des Generators erweitern zu können, andererseits aber auch um die für eine Netzeinspeisung erforderliche Güte der Wechselspannung sicher zu stellen. Wechselrichter ermöglichen dabei eine Trennung der einspeiseseitigen elektrischen Parameter von jenen der netzseitigen Parameter wie Frequenz und Spannung, und stellen somit das zentrale Bindeglied zwischen der Einspeiseseite und dem Netz dar.

Eine Schwierigkeit stellen dabei sogenannte Rippelströme am Ein- und Ausgang des Wechselrichters dar, die die Güte der Spannungsumrichtung beeinträchtigen. Des Weiteren besteht in der Wechselrichtertechnik noch großes Innovationspotential hinsichtlich der schaltungstechnischen Eigenschaften des Wechselrichters, sowie der Bauvolumen- und Kostenreduktion.

Es ist somit das Ziel der Erfindung, durch Optimierung der Wechselrichtertopologie in Verbindung mit dem realen Verhalten der Bauelemente eine Steigerung an Wirkungsgrad und Stromqualität bei geringeren Kosten zu erzielen.

Dieses Ziel wird durch die Merkmale von Anspruch 1 bzw. 2 erreicht. Anspruch 1 und 2 beziehen sich jeweils auf einen Wechselrichter mit einer vier Schaltelemente aufweisenden Brückenschaltung, bei der zwei gegenüber liegende Anschlussklemmen der Brückenschaltung mit dem Gleichspannungsteil des Wechselrichters verbunden sind, und die beiden anderen Anschlussklemmen der Brückenschaltung mit dem Wechselspannungsteil des Wechselrichters verbunden sind, wobei durch geeignete Ansteuerung der Schaltelemente Gleich- und Wechselspannung ineinander umwandelbar sind. Erfindungsgemäß ist hierbei vorgesehen, dass im Wechselspannungsteil eine wechselspannungsseitige Induktivität geschalten ist, und im Gleichspannungsteil an der positiven Gleichspannungsklemme eine gleichspannungsseitige Induktivität angekoppelt ist, der ein zwischen der gleichspannungsseitigen Induktivität und der Brückenschaltung in Serie geschalteter Ladekondensator nachgeordnet ist, wobei in der Reihenschaltung zwischen der gleichspannungsseitigen Induktivität und dem Ladekondensator einerseits, und der negativen Gleichspannungsklemme des Gleichspannungsteils andererseits ein weiteres Schaltelement geschalten ist, das im geschlossenen Zustand die mit der positiven Gleichspannungsklemme verbundene Seite des Ladekondensators mit der negativen Gleichspannungsklemme verbindet. Wie noch näher ausgeführt werden wird, ermöglicht eine solche Schaltungsanordnung eine bidirektionale Energieübertragung vom Gleichspannungsteil in den Wechselspannungsteil und umgekehrt, wobei die Umwandlung mit hoher Güte erfolgt, insbesondere unter Reduzierung von Rippelströmen.

Anspruch 2 sieht eine alternative Ausführungsform vor, die sich von jener gemäß Anspruch 1 durch eine Variation des Gleichspannungsteils unterscheidet. Hierzu ist zunächst im Wechselspannungsteil wiederum eine wechselspannungsseitige Induktivität geschalten, und im Gleichspannungsteil ist an der positiven Gleichspannungsklemme ein gleichspannungsseitiges Schaltelement angekoppelt, dem ein zwischen dem gleichspannungsseitigen Schaltelement und der Brückenschaltung in Serie geschalteter Ladekondensator nachgeordnet ist, wobei in der Reihenschaltung zwischen dem gleichspannungsseitigen Schaltelement und dem Ladekondensator einerseits, sowie der negativen Gleichspannungsklemme des Gleichspannungsteils andererseits eine gleichspannungsseitige Induktivität geschalten ist, die die mit der positiven Gleichspannungsklemme verbundene Seite des Ladekondensators mit der negativen Gleichspannungsklemme verbindet.

Die Ansprüche 3 bis 5 sehen vorteilhafte Weiterbildungen des erfindungsgemäßen Wechslerichters dar. Hierbei ist im Wechselspannungsteil jeweils ein wechselspannungsseitiger Glättungskondensator geschalten, und im Gleichspannungsteil ein gleichspannungsseitiger Glättungskondensator. Des Weiteren wird vorgeschlagen, dass es sich bei den Schaltelementen um Halbleiter-Schaltelemente, insbesondere um Leistungs-MOSFET oder IGBT, handelt.

Die Erfindung wird im Folgenden anhand der beiliegenden Zeichnungen näher erläutert. Hierbei zeigen die
Fig. 1 den prinzipiellen Schaltplan einer ersten Ausführungsform des erfindungsgemäßen Wechselrichters mit CUK Wandler,
Fig. 2 die Ausführungsform gemäß Fig. 1 mit zusätzlichen Entlastungsdioden an den jeweiligen Schaltelementen,
Fig. 3 die Einschaltphase der Schaltsequenz bei der positiven Halbwelle beim erfindungsgemäßen Wechselrichter gemäß Fig. 1, wobei der Energiefluss vom Gleichspannungsteil in den Wechselspannungsteil erfolgt,
Fig. 4 die Ausschaltphase der Schaltsequenz bei der positiven Halbwelle beim erfindungsgemäßen Wechselrichter gemäß Fig. 1, wobei der Energiefluss vom Gleichspannungsteil in den Wechselspannungsteil erfolgt,
Fig. 5 die Einschaltphase der Schaltsequenz bei der negativen Halbwelle beim erfindungsgemäßen Wechselrichter gemäß Fig. 1, wobei der Energiefluss vom Gleichspannungsteil in den Wechselspannungsteil erfolgt,
Fig. 6 die Ausschaltphase der Schaltsequenz bei der negativen Halbwelle beim erfindungsgemäßen Wechselrichter gemäß Fig. 1, wobei der Energiefluss vom Gleichspannungsteil in den Wechselspannungsteil erfolgt,
Fig. 7 die Einschaltphase der Schaltsequenz bei der positiven Halbwelle beim erfindungsgemäßen Wechselrichter gemäß Fig. 1, wobei der Energiefluss vom Wechselspannungsteil in den Gleichspannungsteil erfolgt,
Fig. 8 die Ausschaltphase der Schaltsequenz bei der positiven Halbwelle beim erfindungsgemäßen Wechselrichter gemäß Fig. 1, wobei der Energiefluss vom Wechselspannungsteil in den Gleichspannungsteil erfolgt,
Fig. 9 die Einschaltphase der Schaltsequenz bei der negativen Halbwelle beim erfindungsgemäßen Wechselrichter gemäß Fig. 1, wobei der Energiefluss vom Wechselspannungsteil in den Gleichspannungsteil erfolgt,
Fig. 10 die Ausschaltphase der Schaltsequenz bei der negativen Halbwelle beim erfindungsgemäßen Wechselrichter gemäß Fig. 1, wobei der Energiefluss vom Wechselspannungsteil in den Gleichspannungsteil erfolgt,
Fig. 11 den zeitlichen Verlauf von Spannung und Steuersignal für die Schaltelemente beim Energiefluss in den Wechselspannungsteil und erfindungsgemäßen Wechselrichter gemäß Fig. 1,
Fig. 12 den zeitlichen Verlauf von Spannung und Steuersignal für die Schaltelemente beim Energiefluss in den Gleichspannungsteil und erfindungsgemäßen Wechselrichter gemäß Fig. 1,
Fig. 13 den zeitlichen Verlauf von Spannung, Strom und Steuersignal für die Schaltelemente bei Blindleistungs-Aufnahme mit induktiver Last und erfindungsgemäßen Wechselrichter gemäß Fig. 1, wie sie etwa im Inselbetrieb gegeben ist,
Fig. 14 den zeitlichen Verlauf von Spannung, Strom und Steuersignal für die Schaltelemente bei Blindleistungs-Aufnahme mit kapazitiver Last und erfindungsgemäßen Wechselrichter gemäß Fig. 1, wie sie etwa im Inselbetrieb gegeben ist,
Fig. 15 den prinzipiellen Schaltplan einer zweiten Ausführungsform des erfindungsgemäßen Wechselrichters mit ZETA Wandler,
Fig. 16 die Ausführungsform gemäß Fig. 15 mit zusätzlichen Entlastungsdioden an den jeweiligen Schaltelementen,
Fig. 17 die Einschaltphase der Schaltsequenz bei der positiven Halbwelle beim erfindungsgemäßen Wechselrichter gemäß Fig. 15, wobei der Energiefluss vom Gleichspannungsteil in den Wechselspannungsteil erfolgt,
Fig. 18 die Ausschaltphase der Schaltsequenz bei der positiven Halbwelle beim erfindungsgemäßen Wechselrichter gemäß Fig. 15, wobei der Energiefluss vom Gleichspannungsteil in den Wechselspannungsteil erfolgt,
Fig. 19 die Einschaltphase der Schaltsequenz bei der negativen Halbwelle beim erfindungsgemäßen Wechselrichter gemäß Fig. 15, wobei der Energiefluss vom Gleichspannungsteil in den Wechselspannungsteil erfolgt,
Fig. 20 die Ausschaltphase der Schaltsequenz bei der negativen Halbwelle beim erfindungsgemäßen Wechselrichter gemäß Fig. 15, wobei der Energiefluss vom Gleichspannungsteil in den Wechselspannungsteil erfolgt,
Fig. 21 die Einschaltphase der Schaltsequenz bei der positiven Halbwelle beim erfindungsgemäßen Wechselrichter gemäß Fig. 15, wobei der Energiefluss vom Wechselspannungsteil in den Gleichspannungsteil erfolgt,
Fig. 22 die Ausschaltphase der Schaltsequenz bei der positiven Halbwelle beim erfindungsgemäßen Wechselrichter gemäß Fig. 15, wobei der Energiefluss vom Wechselspannungsteil in den Gleichspannungsteil erfolgt,
Fig. 23 die Einschaltphase der Schaltsequenz bei der negativen Halbwelle beim erfindungsgemäßen Wechselrichter gemäß Fig. 15, wobei der Energiefluss vom Wechselspannungsteil in den Gleichspannungsteil erfolgt,
Fig. 24 die Ausschaltphase der Schaltsequenz bei der negativen Halbwelle beim erfindungsgemäßen Wechselrichter gemäß Fig. 15, wobei der Energiefluss vom Wechselspannungsteil in den Gleichspannungsteil erfolgt,
Fig. 25 den zeitlichen Verlauf von Spannung und Steuersignal für die Schaltelemente beim Energiefluss in den Wechselspannungsteil und erfindungsgemäßen Wechselrichter gemäß Fig. 15,
Fig. 26 den zeitlichen Verlauf von Spannung und Steuersignal für die Schaltelemente beim Energiefluss in den Gleichspannungsteil und erfindungsgemäßen Wechselrichter gemäß Fig. 15,
Fig. 27 den zeitlichen Verlauf von Spannung, Strom und Steuersignal für die Schaltelemente bei Blindleistungs-Aufnahme mit induktiver Last und erfindungsgemäßen Wechselrichter gemäß Fig. 15, wie sie etwa im Inselbetrieb gegeben ist, und
Fig. 28 den zeitlichen Verlauf von Spannung, Strom und Steuersignal für die Schaltelemente bei Blindleistungs-Aufnahme mit kapazitiver Last und erfindungsgemäßen Wechselrichter gemäß Fig. 15, wie sie etwa im Inselbetrieb gegeben ist.

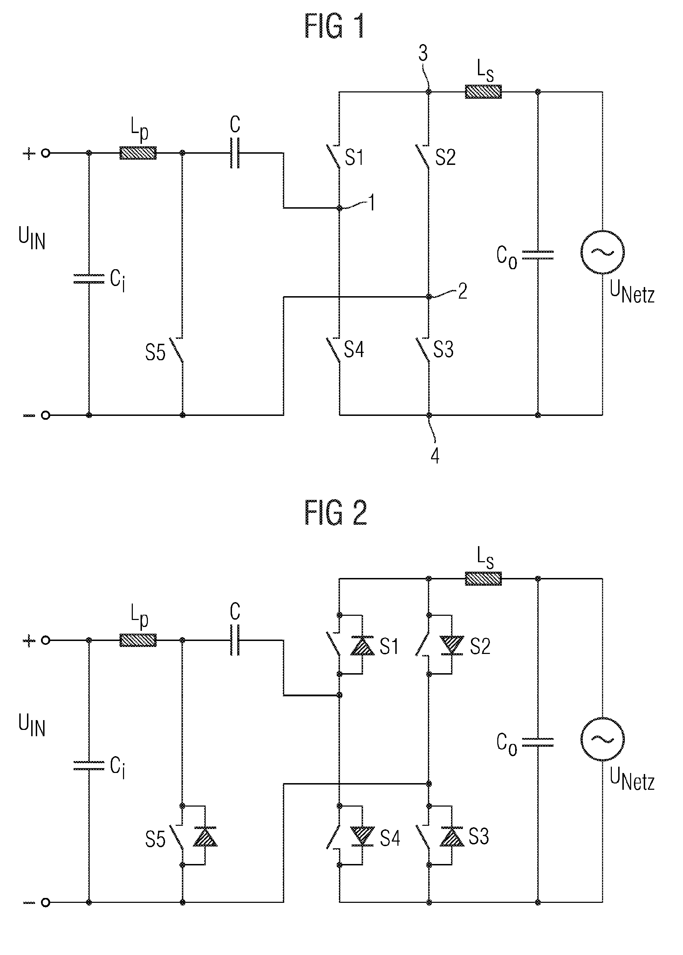

Der prinzipielle Schaltplan einer ersten Ausführungsform des erfindungsgemäßen Wechselrichters wird zunächst anhand der Fig. 1 erläutert. Der Wechselrichter gemäß Fig. 1 weist eine Brückenschaltung mit vier Schaltelementen S1, S2, S3 und S4 auf, bei der zwei gegenüber liegende Anschlussklemmen 1, 2 der Brückenschaltung mit dem Gleichspannungsteil des Wechselrichters verbunden sind, und die beiden anderen Anschlussklemmen 3, 4 der Brückenschaltung mit dem Wechselspannungsteil des Wechselrichters. Die eigentliche Umwandlung von Gleichspannung in Wechselspannung erfolgt dabei über die vier Schaltelemente S1, S2, S3 und S4 in der Brückenschaltung, die eine Vollbrücke darstellt, wobei in an sich bekannter Weise durch geeignete Ansteuerung der Schaltelemente S1, S2, S3 und S4 Gleich- und Wechselspannung ineinander umwandelbar sind.

Im Wechselspannungsteil ist eine wechselspannungsseitige Induktivität Lₛ geschalten. Im Gleichspannungsteil ist an der positiven Gleichspannungsklemme eine gleichspannungsseitige Induktivität L_{P} angekoppelt, der ein zwischen der gleichspannungsseitigen Induktivität L_{P} und der Brückenschaltung in Serie geschalteter Ladekondensator C nachgeordnet ist. In der Reihenschaltung zwischen der gleichspannungsseitigen Induktivität L_{P} und dem Ladekondensator C einerseits, sowie der negativen Gleichspannungsklemme des Gleichspannungsteils andererseits ist ein weiteres Schaltelement S5 geschalten, das im geschlossenen Zustand die mit der positiven Gleichspannungsklemme verbundene Seite des Ladekondensators C mit der negativen Gleichspannungsklemme verbindet. Im Gleichspannungsteil befindet sich die Gleichspannungsquelle U_{IN}, die bei einem Energiefluss vom Wechselspannungsteil in den Gleichspannungsteil aber auch als Speicherelement dient. Im Wechselspannungsteil befindet sich die Last U_{Netz}, die bei einem Energiefluss vom Wechselspannungsteil in den Gleichspannungsteil aber auch als Quelle fungiert.

Im Wechselspannungsteil ist des Weiteren ein wechselspannungsseitiger Glättungskondensator C₀ geschalten, und im Gleichspannungsteil ein gleichspannungsseitiger Glättungskondensator Cᵢ. Bei den Schaltelementen S1, S2, S3, S4 und S5 handelt es sich vorzugsweise um Halbleiter-Schaltelemente, insbesondere um Leistungs-MOSFET.

Die Fig. 2 zeigt die Ausführungsform gemäß Fig. 1 mit zusätzlichen Entlastungsdioden an den jeweiligen Schaltelementen S1, S2, S3, S4 und S5.

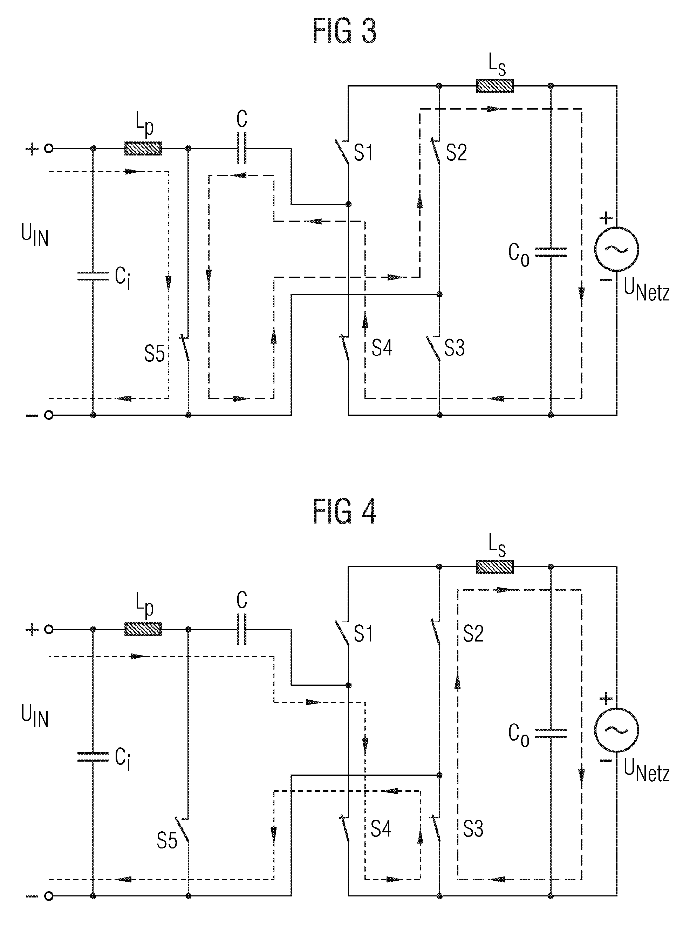

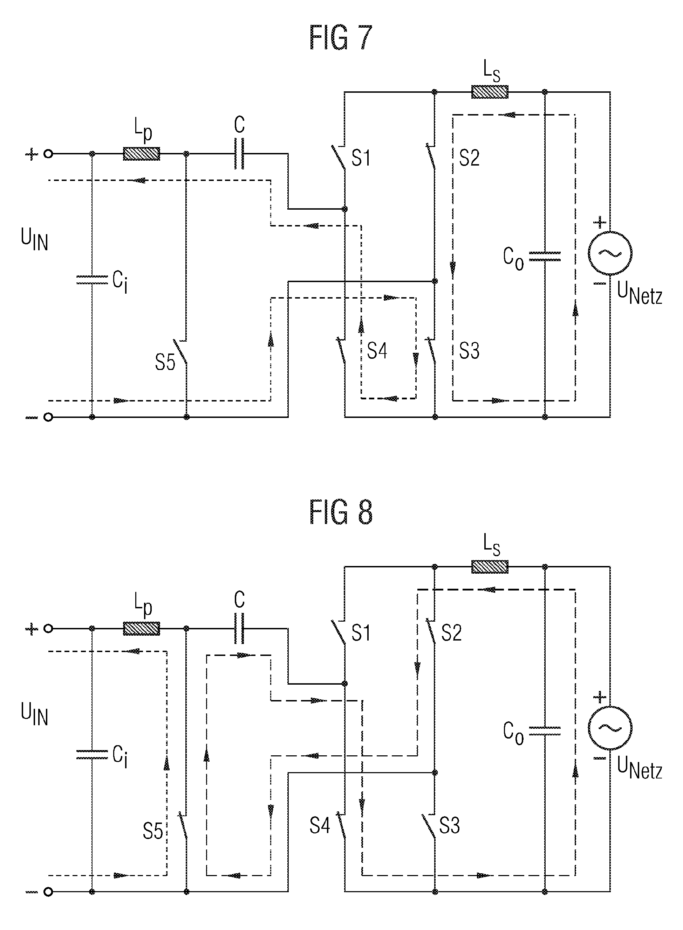

Im Folgenden wird nun anhand der Fig. 3 bis 10 die Schaltsequenz zur Ansteuerung der Schaltelemente S1, S2, S3, S4 und S5 bei einem Energiefluss vom Gleichspannungsteil in den Wechselspannungsteil (Fig. 3 bis 6) sowie vom Wechselspannungsteil in den Gleichspannungsteil (Fig. 7 bis 10) erläutert.

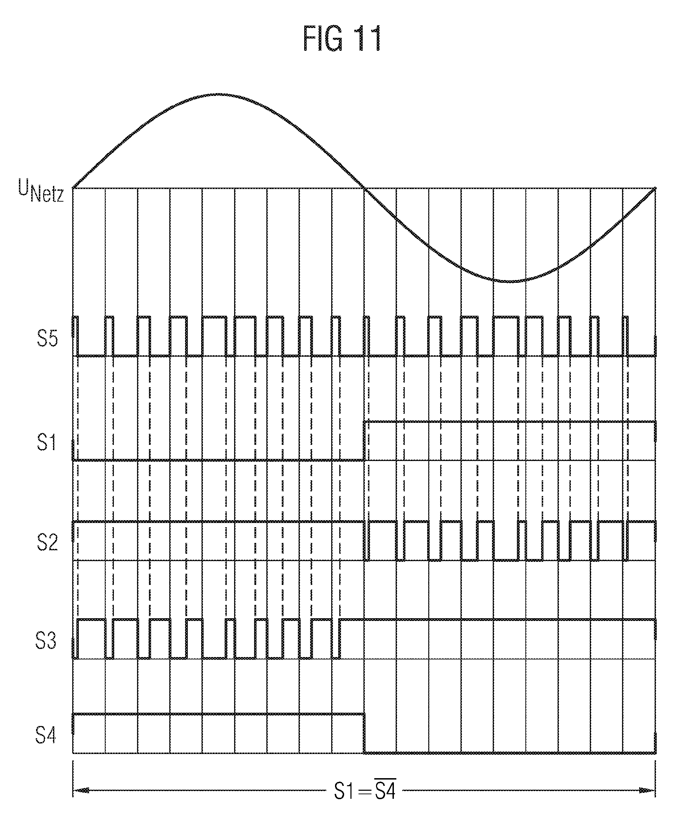

Die Fig. 3 erläutert zunächst die Einschaltphase der Schaltsequenz bei der positiven Halbwelle beim erfindungsgemäßen Wechselrichter gemäß Fig. 1, wobei der Energiefluss vom Gleichspannungsteil in den Wechselspannungsteil erfolgt. Die Ansteuerung der Schaltelemente und insbesondere deren Taktung kann dabei der Fig. 11 entnommen werden. Wie aus der Fig. 11 ersichtlich ist, bleiben zur Erzeugung der positiven Halbwelle an den Ausgangsklemmen des Wechselspannungsteils die Schaltelemente S2 und S4 stets geschlossen, während das Schaltelement S1 stets ausgeschaltet bleibt. Während der Einschaltphase ist das Schaltelement S5 geschlossen, und das Schaltelement S3, das in diesem Zusammenhang auch als Taktschalter bezeichnet wird, ist geöffnet (Fig. 3). In der Ausschaltphase ist das Schaltelement S5 geöffnet, und das Schaltelement S3 geschlossen (Fig. 4). Daraus ergibt sich der in den Fig. 3 und Fig. 4 eingezeichnete Energiefluss. In der Einschaltphase liegt die positive Seite des Ladekondensators C auf Masse, wodurch er sich über die wechselspannungsseitige Induktivität L_{S} entlädt, und dabei an der Last U_{Netz}, wie in der Fig. 3 ersichtlich, eine positive Spannung erzeugt. In der Ausschaltphase liegt der Ladekondensator C₀ am positiven Potential der Gleichspannungsquelle U_{IN}, wodurch er wieder aufgeladen wird. Während dessen treibt die wechselspannungsseitige Induktivität L_{S} den Laststrom, und sorgt an der Last U_{Netz} wiederum für eine positive Spannung. Das Tastverhältnis ist dabei, wie aus der Fig. 11 ersichtlich ist, so gewählt, dass die Einschaltphase des Schaltelements S5 immer länger wird, und die Einschaltphase des Schaltelements S3 entsprechend immer kürzer, bis das Maximum der positiven Halbwelle an der Last U_{Netz} erreicht ist. Danach wird die Einschaltphase des Schaltelements S5 immer kürzer gewählt, und die Einschaltphase des Schaltelements S3 entsprechend immer länger, bis der Nulldurchgang der positiven Halbwelle an der Last U-Netz erreicht ist.

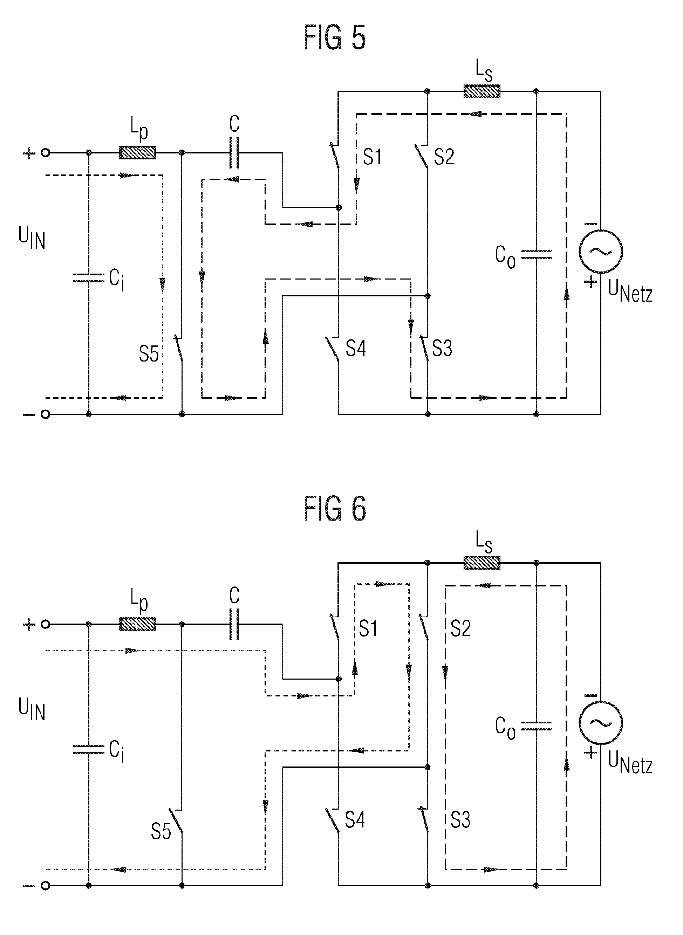

Die Erzeugung der negativen Halbwelle ist in den Fig. 5 und Fig. 6 gezeigt. Dabei bleiben die Schaltelemente S1 und S3 stets geschlossen, während das Schaltelement S4 stets geöffnet bleibt. Während der Einschaltphase ist das Schaltelement S5 geschlossen, und das Schaltelement S2, das in diesem Zusammenhang nunmehr als Taktschalter bezeichnet wird, ist geöffnet (Fig. 5). In der Ausschaltphase ist das Schaltelement S5 geöffnet, und das Schaltelement S2 geschlossen (Fig. 6). Daraus ergibt sich der in den Fig. 5 und Fig. 6 eingezeichnete Energiefluss. In der Einschaltphase liegt die positive Seite des Ladekondensators C wiederum auf Masse, wodurch er sich über die wechselspannungsseitige Induktivität Lₛ entlädt, wobei er aber an der Last U_{Netz}, wie in der Fig. 5 ersichtlich, eine Umpolung der Spannung gegenüber der Fig. 3 bewirkt. In der Ausschaltphase liegt der Ladekondensator C₀ am positiven Potential der Gleichspannungsquelle U_{IN}, wodurch er wieder aufgeladen wird. Während dessen treibt die wechselspannungsseitige Induktivität L_{S} den Laststrom, und sorgt an der Last U_{Netz} wiederum für eine umgepolte Spannung. Das Tastverhältnis ist dabei, wie aus der Fig. 11 ersichtlich ist, so gewählt, dass die Einschaltphase des Schaltelements S5 immer länger wird, und die Einschaltphase des Schaltelements S2 entsprechend immer kürzer, bis das Minimum der negativen Halbwelle an der Last U_{Netz} erreicht ist. Danach wird die Einschaltphase des Schaltelements S5 immer kürzer gewählt, und die Einschaltphase des Schaltelements S2 entsprechend immer länger, bis der Nulldurchgang der negativen Halbwelle an der Last U_{Netz} erreicht ist.

Der erfindungsgemäße Wechselrichter kann bidirektional betrieben werden, wie anhand der Fig. 7 bis 10 erläutert wird. Somit eignet er sich auch zur Rückspeisung von Energie aus dem Wechselspannungsteil in den Gleichspannungsteil.

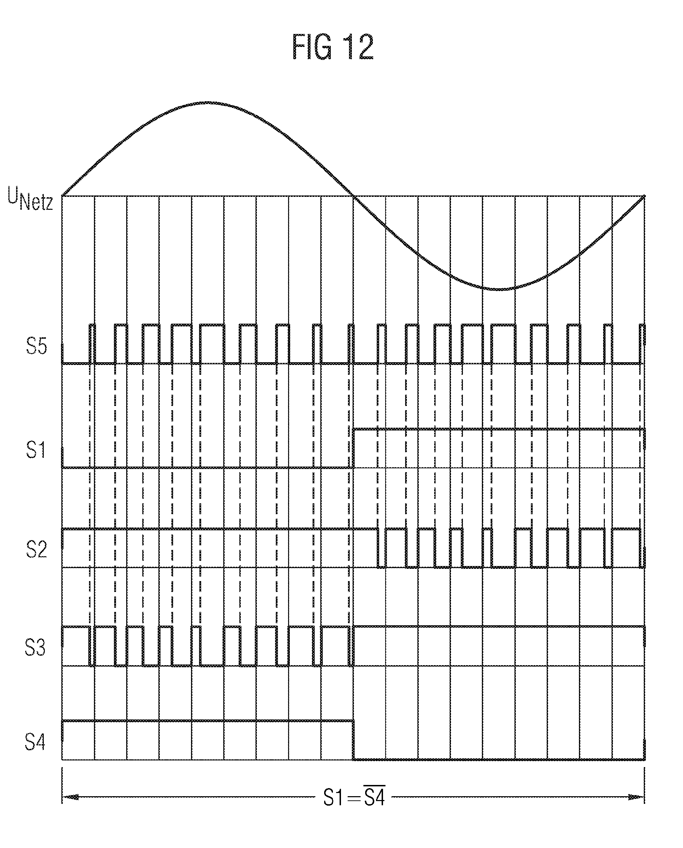

Die Fig. 7 erläutert zunächst die Einschaltphase der Schaltsequenz bei der positiven Halbwelle beim erfindungsgemäßen Wechselrichter gemäß Fig. 1, wobei der Energiefluss nun vom Wechselspannungsteil in den Gleichspannungsteil erfolgt. Die Ansteuerung der Schaltelemente und insbesondere deren Taktung kann dabei der Fig. 12 entnommen werden. Wie aus der Fig. 12 ersichtlich ist, bleiben nun bei der positiven Halbwelle an den Eingangsklemmen des Wechselspannungsteils die Schaltelemente S2 und S4 stets geschlossen, während das Schaltelement S1 stets ausgeschaltet bleibt. Während der Einschaltphase ist das Schaltelement S3 geschlossen, und das Schaltelement S5, das in diesem Zusammenhang nunmehr als Taktschalter bezeichnet wird, ist geöffnet (Fig. 7). In der Ausschaltphase ist das Schaltelement S3 geöffnet, und das Schaltelement S5 geschlossen (Fig. 8). Daraus ergibt sich der in den Fig. 7 und Fig. 8 eingezeichnete Energiefluss. In der Einschaltphase liegt die positive Seite des Ladekondensators C an der positiven Ausgangsklemme des Gleichspannungsteils, wodurch er sich über die gleichspannungsseitige Induktivität L_{P} entlädt, und dabei eine positive Spannung rückspeist. In der Ausschaltphase wird der Ladekondensator C durch die positive Halbwelle an den Eingangsklemmen des Wechselspannungsteils wieder aufgeladen. Während dessen treibt die gleichspannungsseitige Induktivität L_{P} den Laststrom, und sorgt an der in Bezug auf die Fig. 8 oberen Ausgangsklemme des Gleichspannungsteils wiederum für eine positive Spannung. Das Tastverhältnis ist dabei, wie aus der Fig. 12 ersichtlich ist, so gewählt, dass die Einschaltphase des Schaltelements S5 immer länger wird, und die Einschaltphase des Schaltelements S3 entsprechend immer kürzer, bis das Maximum der positiven Halbwelle an den Eingangsklemmen des Wchselspannungsteils erreicht ist. Danach wird die Einschaltphase des Schaltelements S5 immer kürzer gewählt, und die Einschaltphase des Schaltelements S3 entsprechend immer länger, bis der Nulldurchgang der positiven Halbwelle erreicht ist.

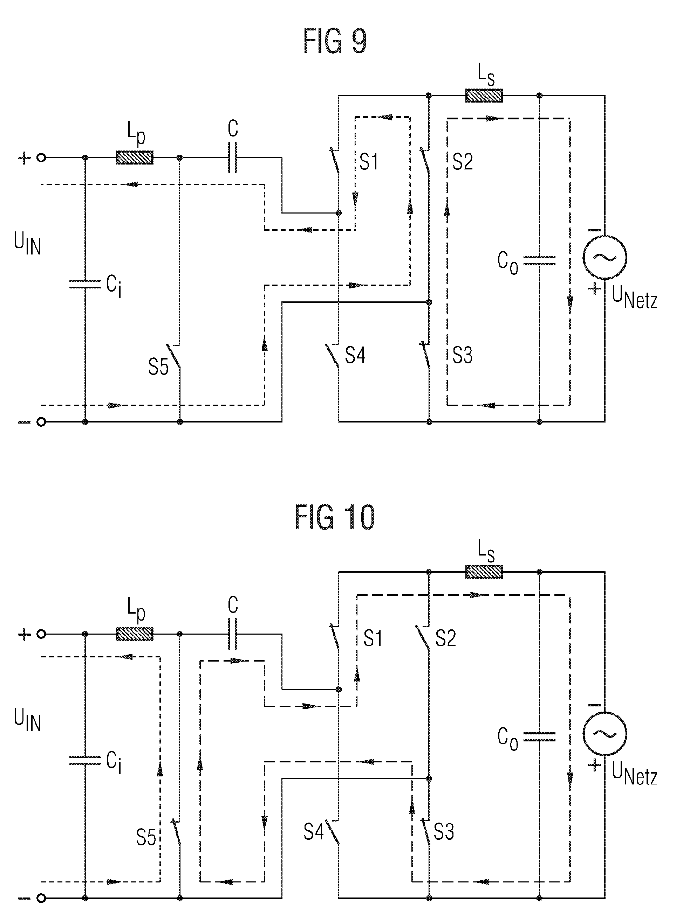

Die Erzeugung der negativen Halbwelle ist in den Fig. 9 und Fig. 10 gezeigt. Dabei bleiben die Schaltelemente S1 und S3 stets geschlossen, während das Schaltelement S4 stets geöffnet bleibt. Während der Einschaltphase ist das Schaltelement S2 geschlossen, und das Schaltelement S5, das in diesem Zusammenhang wiederum als Taktschalter bezeichnet wird, ist geöffnet (Fig. 9). In der Ausschaltphase ist das Schaltelement S2 geöffnet, und das Schaltelement S5 geschlossen (Fig. 10). Daraus ergibt sich der in den Fig. 9 und Fig. 10 eingezeichnete Energiefluss. In der Einschaltphase liegt die positive Seite des Ladekondensators C an der positiven Ausgangsklemme des Gleichspannungsteils, wodurch er sich über die gleichspannungsseitige Induktivität L_{P} entlädt, und dabei eine positive Spannung rückspeist. In der Ausschaltphase wird der Ladekondensator C aufgrund der Ansteuerung der Schaltelemente der Brückenschaltung gemäß Fig. 10 auch durch die negative Halbwelle an den Eingangsklemmen des Wechselspannungsteils wieder so aufgeladen, dass an der in Bezug auf die Fig. 10 linken Seite des Ladekondensators C eine positive Aufladung erfolgt. Während dessen treibt die gleichspannungsseitige Induktivität L_{P} den Laststrom, und sorgt an der in Bezug auf die Fig. 10 oberen Ausgangsklemme des Gleichspannungsteils wiederum für eine positive Spannung. Das Tastverhältnis ist dabei, wie aus der Fig. 12 ersichtlich ist, so gewählt, dass die Einschaltphase des Schaltelements S5 immer länger wird, und die Einschaltphase des Schaltelements S2 entsprechend immer kürzer, bis das Minimum der negativen Halbwelle an den Eingangsklemmen des Wechselspannungsteils erreicht ist. Danach wird die Einschaltphase des Schaltelements S5 immer kürzer gewählt, und die Einschaltphase des Schaltelements S2 entsprechend immer länger, bis der Nulldurchgang der negativen Halbwelle erreicht ist.

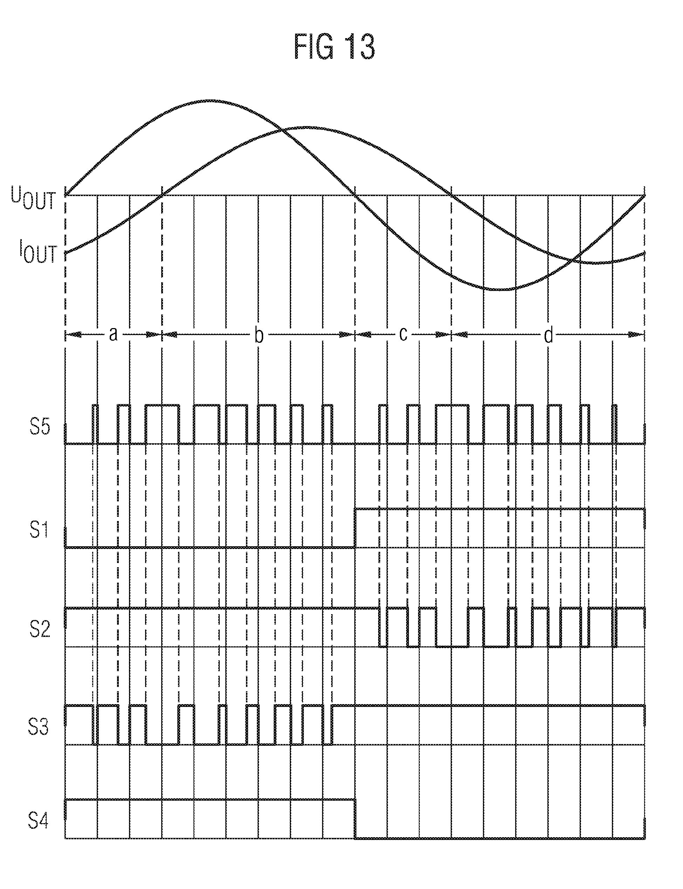

In der Fig. 13 ist der zeitliche Verlauf von Spannung, Strom und Steuersignal für die Schaltelemente S1, S2, S3, S4 und S5 bei Blindleistungs-Aufnahme mit induktiver Last und erfindungsgemäßen Wechselrichter gemäß Fig. 1 gezeigt, wie sie etwa im Inselbetrieb gegeben ist. In der Fig. 13 ist dabei der zeitliche Verlauf mit einer induktiven Last im Inselbetrieb dargestellt, der Netzstrom läuft der Netzspannung demnach hinterher. Dabei ergibt sich ein Mischbetrieb zwischen Einspeisung in das Stromnetz und Zurückspeisung von Blindenergie aus dem Stromnetz. Während einer Spannungshalbwelle gibt es sowohl negative als auch positive Stromverläufe. Dementsprechend sind die in der Fig. 13 dargestellten Schaltzyklen der taktenden Schaltelemente S5 und S3 bzw. S2 davon abhängig, ob beispielsweise während einer positiven Spannungshalbwelle ein positiver Netzstrom (Einspeisung) oder ein negativer Netzstrom (Zurückspeisung) fließt. Dabei ergibt sich die zu übertragende Energie als das Produkt aus Netzspannung und Netzstrom und daraus wiederum die Pulsweitenmodulation der Steuersignale.

Die Schaltzustände des ersten Schaltelements S1 und des vierten Schaltelements S4 entsprechen denen in Fig. 11 dargestellten. Während einer positiven Halbwelle taktet das dritte Schaltelement S3 und während einer negativen Halbwelle das zweite Schaltelement S2 invers zum fünften Schaltelement S5. Wenn dabei die Vorzeichen des Netzstromes und der Netzspannung gleich sind, beginnt ein Schaltzyklus mit dem Einschalten des fünften Schaltelements S5 (Einspeisung). Bei unterschiedlichen Vorzeichen hingegen beginnt ein Schaltzyklus mit dem Einschalten des dritten Schaltelements S3 während einer positiven Spannungshalbwelle, und mit dem Einschalten des zweiten Schaltelements S2 während einer negativen Spannungshalbwelle.

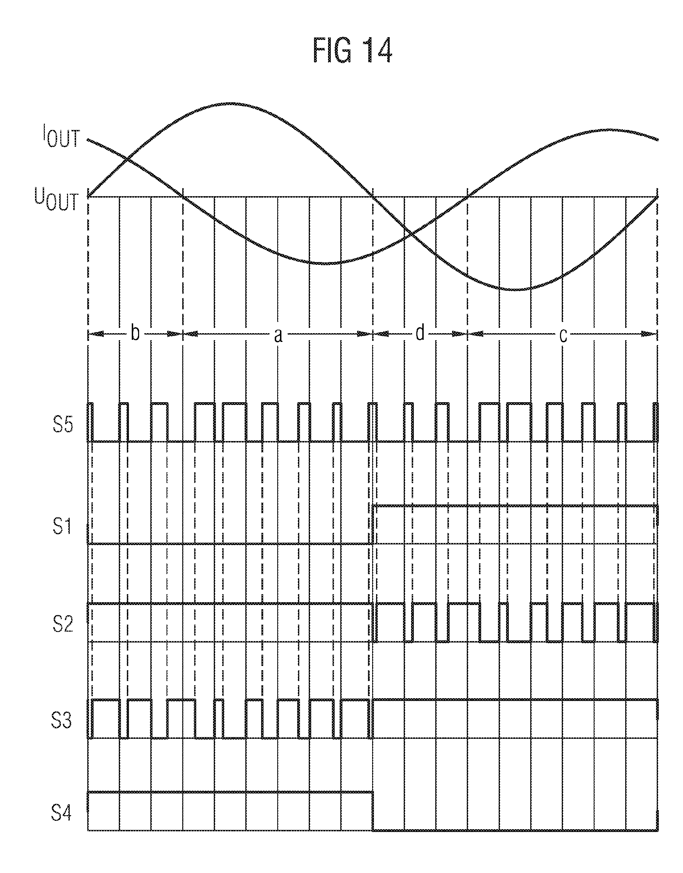

In der Fig. 14 sind die zeitlichen Verläufe bei einem Inselbetrieb mit kapazitiver Last dargestellt. Dabei läuft der Netzstrom der Netzspannung voraus. Gegenüber den in Fig. 13 dargestellten Schaltsignalverläufen ändern sich damit die Verhältnisse der Einschaltzeiten zu den Ausschaltzeiten der taktenden Schaltelemente S5, S3 bzw. S2.

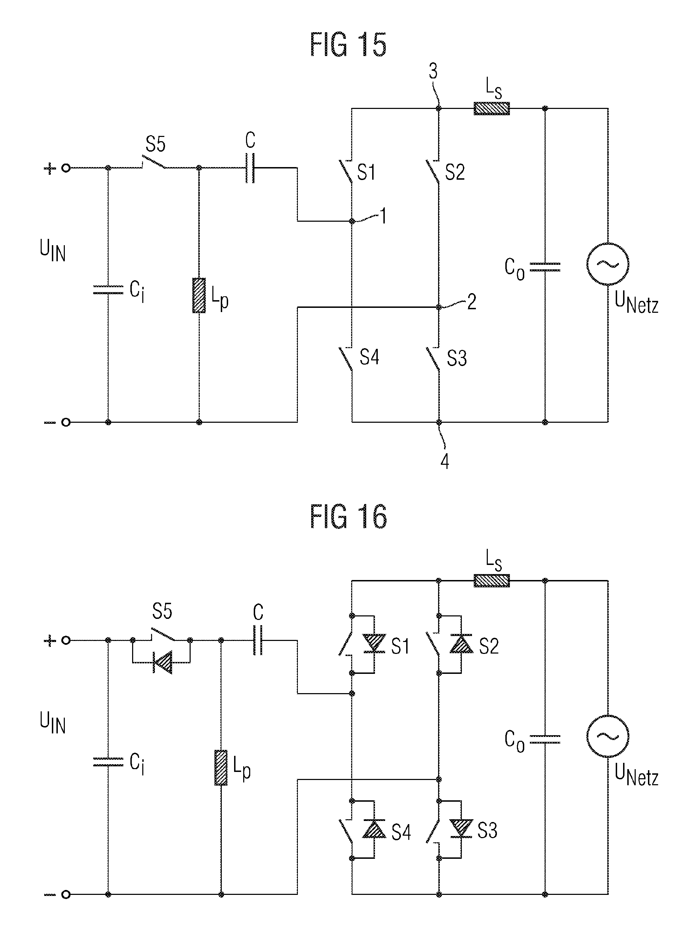

Die Fig. 15 zeigt den prinzipiellen Schaltplan einer zweiten Ausführungsform des erfindungsgemäßen Wechselrichters mit ZETA-Wandler, der auch als netzgeführter Wechselrichter aufgefasst werden kann. Der Wechselrichter gemäß Fig. 15 weist ebenfalls eine Brückenschaltung mit vier Schaltelementen S1, S2, S3 und S4 auf, bei der zwei gegenüber liegende Anschlussklemmen 1, 2 der Brückenschaltung mit dem Gleichspannungsteil des Wechselrichters verbunden sind, und die beiden anderen Anschlussklemmen 3, 4 der Brückenschaltung mit dem Wechselspannungsteil des Wechselrichters. Die eigentliche Umwandlung von Gleichspannung in Wechselspannung erfolgt wiederum über die vier Schaltelemente S1, S2, S3 und S4 in der Brückenschaltung, die eine Vollbrücke darstellt, wobei in an sich bekannter Weise durch geeignete Ansteuerung der Schaltelemente S1, S2, S3 und S4 Gleich- und Wechselspannung ineinander umwandelbar sind.

Im Wechselspannungsteil ist eine wechselspannungsseitige Induktivität L_{S} geschalten. Im Gleichspannungsteil ist an der positiven Gleichspannungsklemme ein gleichspannungsseitiges Schaltelement S5 angekoppelt, dem ein zwischen dem gleichspannungsseitigen Schaltelement S5 und der Brückenschaltung in Serie geschalteter Ladekondensator C nachgeordnet ist, wobei in der Reihenschaltung zwischen dem gleichspannungsseitigen Schaltelement S5 und dem Ladekondensator C einerseits, sowie der negativen Gleichspannungsklemme des Gleichspannungsteils andererseits eine gleichspannungsseitige Induktivität L_{P} geschalten ist, die die mit der positiven Gleichspannungsklemme verbundene Seite des Ladekondensators C mit der negativen Gleichspannungsklemme verbindet. Im Gleichspannungsteil befindet sich die Gleichspannungsquelle U_{IN}, die bei einem Energiefluss vom Wechselspannungsteil in den Gleichspannungsteil aber auch als Speicherelement dient. Im Wechselspannungsteil befindet sich die Last U_{Netz}, die bei einem Energiefluss vom Wechselspannungsteil in den Gleichspannungsteil aber auch als Quelle fungiert.

Im Wechselspannungsteil ist des Weiteren ein wechselspannungsseitiger Glättungskondensator C₀ geschalten, und im Gleichspannungsteil ein gleichspannungsseitiger Glättungskondensator Cᵢ. Bei den Schaltelementen S1, S2, S3, S4 und S5 handelt es sich vorzugsweise um Halbleiter-Schaltelemente, insbesondere um Leistungs-MOSFET oder IGBT.

Die Fig. 16 zeigt die Ausführungsform gemäß Fig. 15 mit zusätzlichen Entlastungsdioden an den jeweiligen Schaltelementen S1, S2, S3, S4 und S5.

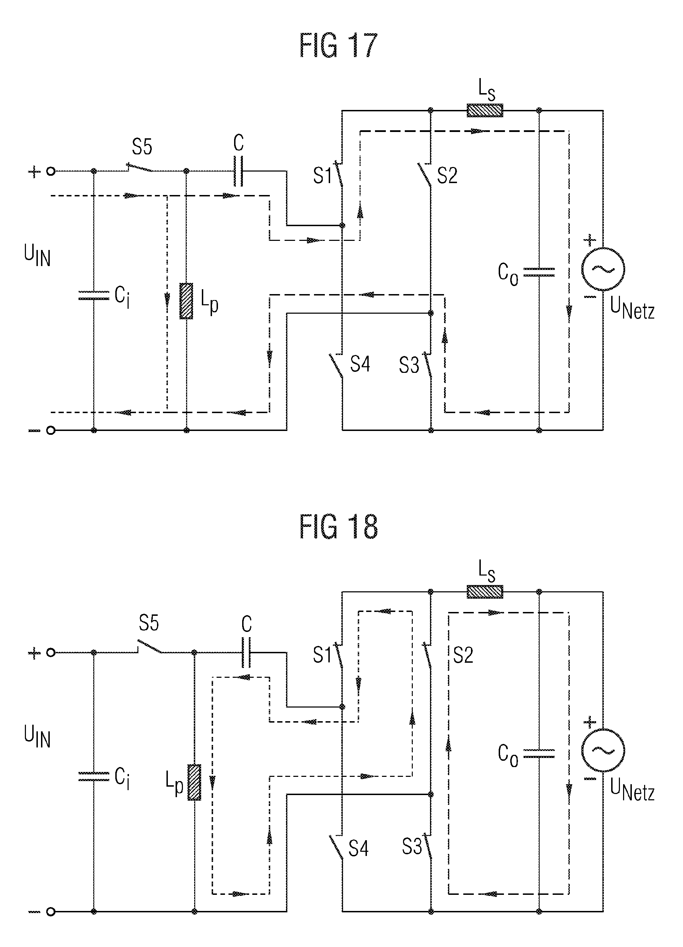

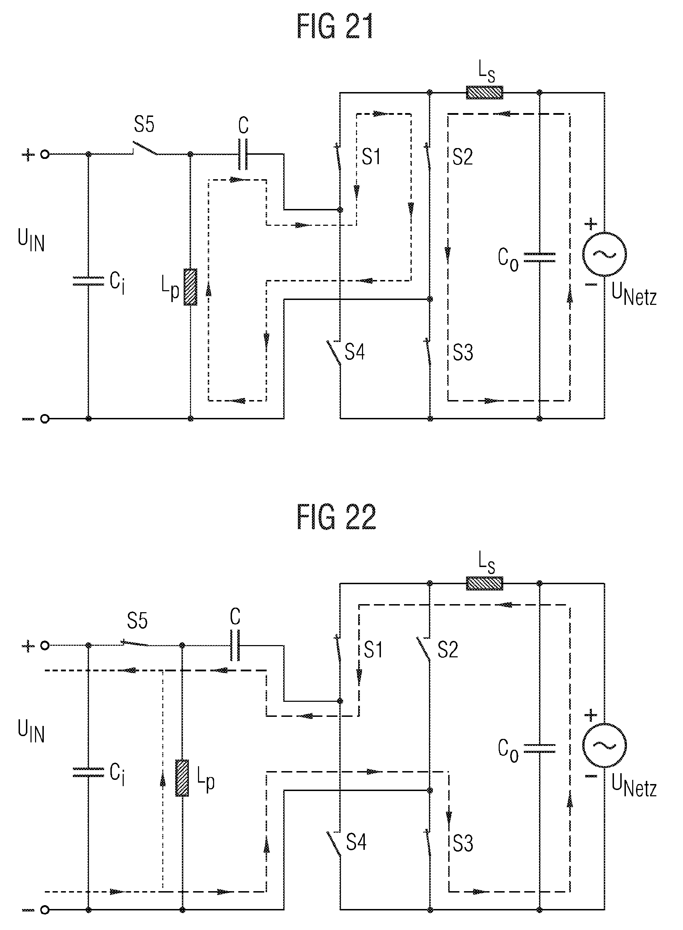

Im Folgenden wird nun anhand der Fig. 17 bis 24 die Schaltsequenz zur Ansteuerung der Schaltelemente S1, S2, S3, S4 und S5 bei einem Energiefluss vom Gleichspannungsteil in den Wechselspannungsteil (Fig. 17 bis 20) sowie vom Wechselspannungsteil in den Gleichspannungsteil (Fig. 21 bis 24) erläutert.

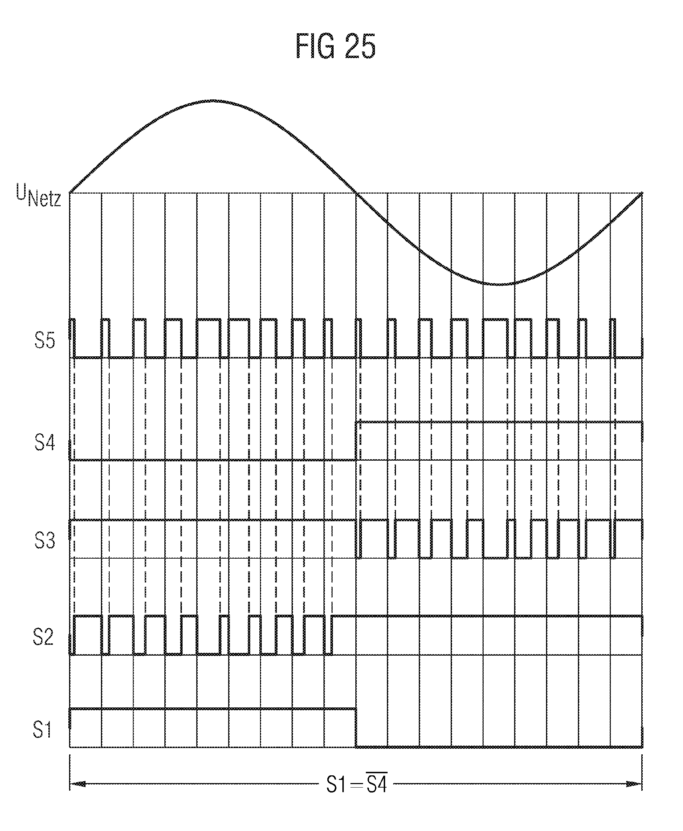

Die Fig. 17 erläutert zunächst die Einschaltphase der Schaltsequenz bei der positiven Halbwelle beim erfindungsgemäßen Wechselrichter gemäß Fig. 15, wobei der Energiefluss vom Gleichspannungsteil in den Wechselspannungsteil erfolgt. Die Ansteuerung der Schaltelemente und insbesondere deren Taktung kann dabei der Fig. 25 entnommen werden. Wie aus der Fig. 25 ersichtlich ist, bleiben zur Erzeugung der positiven Halbwelle an den Ausgangsklemmen des Wechselspannungsteils die Schaltelemente S1 und S3 stets geschlossen, während das Schaltelement S4 stets geöffnet bleibt. Während der Einschaltphase ist das Schaltelement S5 geschlossen, und das Schaltelement S2, das in diesem Zusammenhang auch als Taktschalter bezeichnet wird, ist geöffnet (Fig. 17). In der Ausschaltphase ist das Schaltelement S5 geöffnet, und das Schaltelement S2 geschlossen (Fig. 18). Daraus ergibt sich der in den Fig. 17 und Fig. 18 eingezeichnete Energiefluss. In der Einschaltphase liegt die, in Bezug auf die Fig. 17 gesehen, linke Seite des Ladekondensators C auf dem positiven Potential der Gleichspannungsquelle U_{IN}, und entlädt sich über die wechselspannungsseitige Induktivität L_{S}. Dabei wird an der Last U_{Netz}, wie in der Fig. 17 ersichtlich, eine positive Spannung erzeugt. In der Ausschaltphase wird der Ladekondensator C₀ vom positiven Potential der Gleichspannungsquelle U_{IN} abgetrennt. Während dessen treibt die wechselspannungsseitige Induktivität L_{S} den Laststrom, und sorgt an der Last U_{Netz} wiederum für eine positive Spannung. Das Tastverhältnis ist dabei, wie aus der Fig. 25 ersichtlich ist, so gewählt, dass die Einschaltphase des Schaltelements S5 immer länger wird, und die Einschaltphase des Schaltelements S2 entsprechend immer kürzer, bis das Maximum der positiven Halbwelle an der Last U_{Netz} erreicht ist. Danach wird die Einschaltphase des Schaltelements S5 immer kürzer gewählt, und die Einschaltphase des Schaltelements S2 entsprechend immer länger, bis der Nulldurchgang der positiven Halbwelle an der Last U_{Netz} erreicht ist.

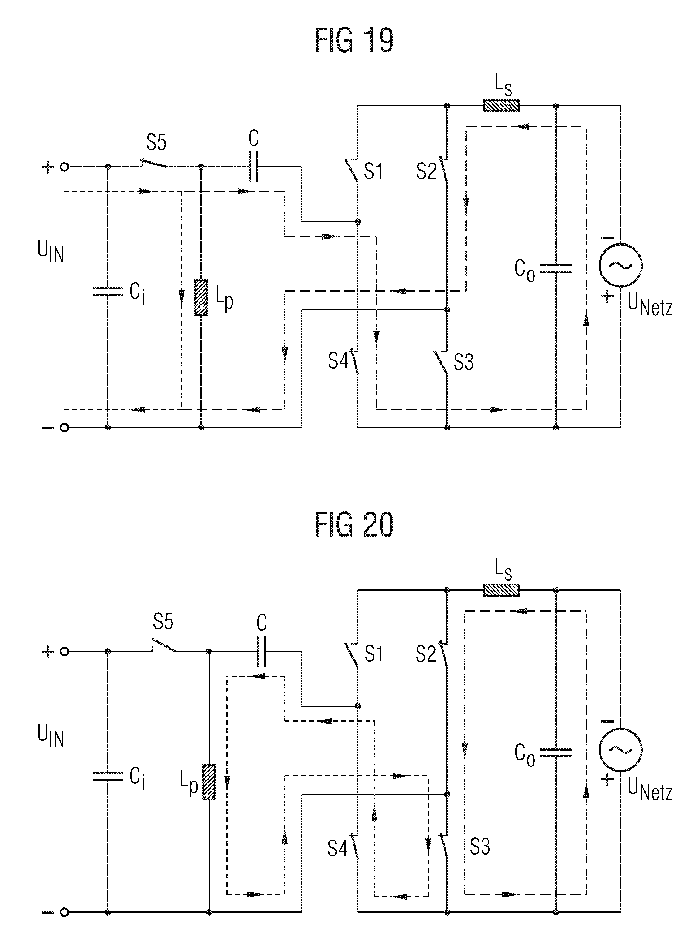

Die Erzeugung der negativen Halbwelle ist in den Fig. 19 und Fig. 20 gezeigt. Dabei bleiben die Schaltelemente S2 und S4 stets geschlossen, während das Schaltelement S1 stets geöffnet bleibt. Während der Einschaltphase ist das Schaltelement S5 geschlossen, und das Schaltelement S3, das in diesem Zusammenhang nunmehr als Taktschalter bezeichnet wird, ist geöffnet (Fig. 19). In der Ausschaltphase ist das Schaltelement S5 geöffnet, und das Schaltelement S3 geschlossen (Fig. 20). Daraus ergibt sich der in den Fig. 19 und Fig. 20 eingezeichnete Energiefluss. In der Einschaltphase liegt die, in Bezug auf die Fig. 19 gesehen, linke Seite des Ladekondensators C auf dem positiven Potential der Gleichspannungsquelle U_{IN}, und entlädt sich über die wechselspannungsseitige Induktivität Lₛ, wobei er aber an der Last U_{Netz}, wie in der Fig. 19 ersichtlich, eine Umpolung der Spannung gegenüber der Fig. 17 bewirkt. In der Ausschaltphase wird der Ladekondensator C₀ vom positiven Potential der Gleichspannungsquelle U_{IN} abgetrennt. Während dessen treibt die wechselspannungsseitige Induktivität L_{S} den Laststrom, und sorgt an der Last U_{Netz} wiederum für eine umgepolte Spannung. Das Tastverhältnis ist dabei, wie aus der Fig. 25 ersichtlich ist, so gewählt, dass die Einschaltphase des Schaltelements S5 immer länger wird, und die Einschaltphase des Schaltelements S3 entsprechend immer kürzer, bis das Minimum der negativen Halbwelle an der Last U_{Netz} erreicht ist. Danach wird die Einschaltphase des Schaltelements S5 immer kürzer gewählt, und die Einschaltphase des Schaltelements S3 entsprechend immer länger, bis der Nulldurchgang der negativen Halbwelle an der Last U_{Netz} erreicht ist.

Auch diese Ausführungsform des erfindungsgemäßen Wechselrichters kann bidirektional betrieben werden, wie anhand der Fig. 21 bis 24 erläutert wird. Somit eignet er sich auch zur Rückspeisung von Energie aus dem Wechselspannungsteil in den Gleichspannungsteil.

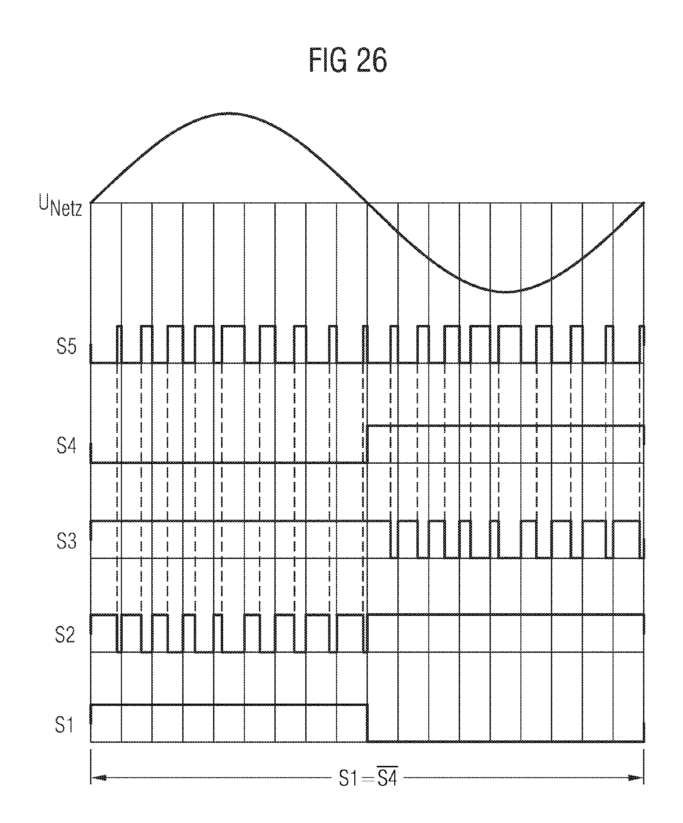

Die Fig. 21 erläutert zunächst die Einschaltphase der Schaltsequenz bei der positiven Halbwelle beim erfindungsgemäßen Wechselrichter gemäß Fig. 15, wobei der Energiefluss nun vom Wechselspannungsteil in den Gleichspannungsteil erfolgt. Die Ansteuerung der Schaltelemente und insbesondere deren Taktung kann dabei der Fig. 26 entnommen werden. Wie aus der Fig. 21 ersichtlich ist, bleiben nun bei der positiven Halbwelle an den Eingangsklemmen des Wechselspannungsteils die Schaltelemente S1 und S3 stets geschlossen, während das Schaltelement S4 stets geöffnet bleibt. Während der Einschaltphase ist das Schaltelement S2 geschlossen, und das Schaltelement S5, das in diesem Zusammenhang nunmehr als Taktschalter bezeichnet wird, ist geöffnet (Fig. 21). In der Ausschaltphase ist das Schaltelement S2 geöffnet, und das Schaltelement S5 geschlossen (Fig. 22). Daraus ergibt sich der in den Fig. 21 und Fig. 22 eingezeichnete Energiefluss. In der Einschaltphase liegt die, in Bezug auf die Fig. 21 gesehen, rechte Seite des Ladekondensators C auf positivem Potential, und entlädt sich über die gleichspannungsseitige Induktivität L_{P}. In der Ausschaltphase wird der Ladekondensator C durch die positive Halbwelle an den Eingangsklemmen des Wechselspannungsteils wieder aufgeladen. Während dessen treibt die gleichspannungsseitige Induktivität L_{P} den Laststrom, und sorgt an der in Bezug auf die Fig. 22 oberen Ausgangsklemme des Gleichspannungsteils für eine positive Spannung. Das Tastverhältnis ist dabei, wie aus der Fig. 26 ersichtlich ist, so gewählt, dass die Einschaltphase des Schaltelements S5 immer länger wird, und die Einschaltphase des Schaltelements S2 entsprechend immer kürzer, bis das Maximum der positiven Halbwelle an den Eingangsklemmen des Wchselspannungsteils erreicht ist. Danach wird die Einschaltphase des Schaltelements S5 immer kürzer gewählt, und die Einschaltphase des Schaltelements S2 entsprechend immer länger, bis der Nulldurchgang der positiven Halbwelle erreicht ist.

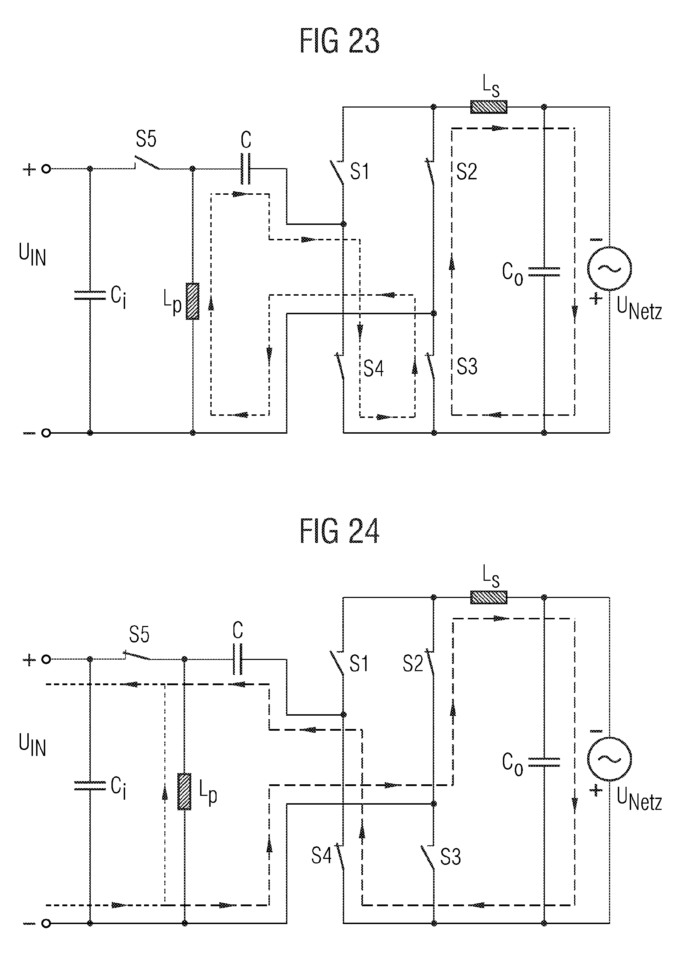

Die Erzeugung der negativen Halbwelle ist in den Fig. 23 und Fig. 24 gezeigt. Dabei bleiben die Schaltelemente S2 und S4 stets geschlossen, während das Schaltelement S1 stets geöffnet bleibt. Während der Einschaltphase ist das Schaltelement S3 geschlossen, und das Schaltelement S5, das in diesem Zusammenhang wiederum als Taktschalter bezeichnet wird, ist geöffnet (Fig. 23). In der Ausschaltphase ist das Schaltelement S3 geöffnet, und das Schaltelement S5 geschlossen (Fig. 24). Daraus ergibt sich der in den Fig. 23 und Fig. 24 eingezeichnete Energiefluss. In der Einschaltphase liegt die, in Bezug auf die Fig. 23 gesehen, rechte Seite des Ladekondensators C auf positivem Potential, und entlädt sich über die gleichspannungsseitige Induktivität L_{P}. In der Ausschaltphase wird der Ladekondensator C durch die positive Halbwelle an den Eingangsklemmen des Wechselspannungsteils wieder aufgeladen. Während dessen treibt die gleichspannungsseitige Induktivität L_{P} den Laststrom, und sorgt wiederum an der in Bezug auf die Fig. 24 oberen Ausgangsklemme des Gleichspannungsteils für eine positive Spannung. Das Tastverhältnis ist dabei, wie aus der Fig. 26 ersichtlich ist, so gewählt, dass die Einschaltphase des Schaltelements S5 immer länger wird, und die Einschaltphase des Schaltelements S3 entsprechend immer kürzer, bis das Minimum der negativen Halbwelle an den Eingangsklemmen des Wechselspannungsteils erreicht ist. Danach wird die Einschaltphase des Schaltelements S5 immer kürzer gewählt, und die Einschaltphase des Schaltelements S3 entsprechend immer länger, bis der Nulldurchgang der negativen Halbwelle erreicht ist.

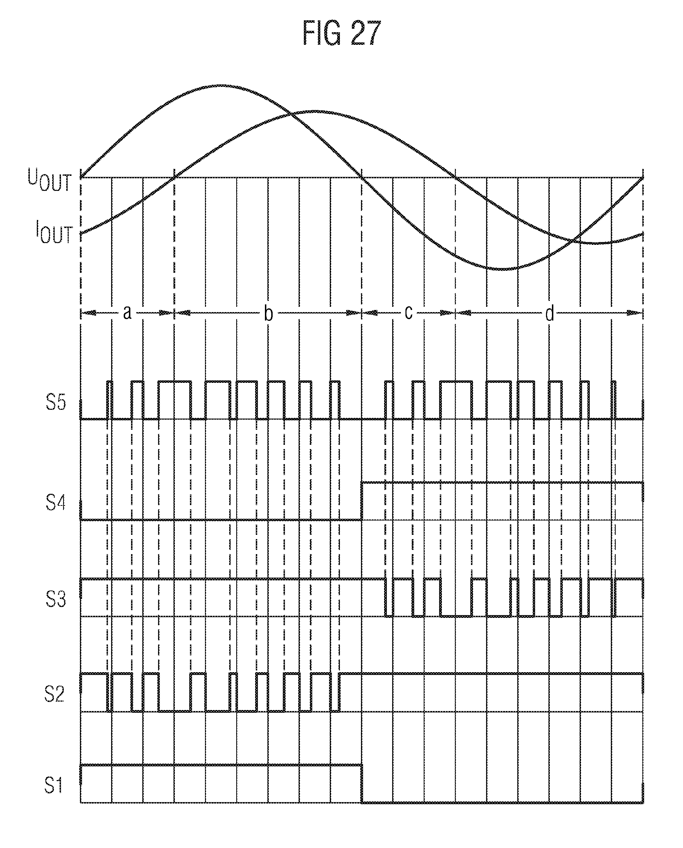

In der Fig. 27 ist der zeitliche Verlauf von Spannung, Strom und Steuersignal für die Schaltelemente S1, S2, S3, S4 und S5 bei Blindleistungs-Aufnahme mit induktiver Last und erfindungsgemäßen Wechselrichter gemäß Fig. 15 gezeigt, wie sie etwa im Inselbetrieb gegeben ist.

In der Fig. 27 ist der zeitliche Verlauf von Spannung, Strom und Steuersignal für die Schaltelemente S1, S2, S3, S4 und S5 bei Blindleistungs-Aufnahme mit induktiver Last und erfindungsgemäßen Wechselrichter gemäß Fig. 1 gezeigt, wie sie etwa im Inselbetrieb gegeben ist. In der Fig. 27 ist der zeitliche Verlauf mit einer induktiven Last im Inselbetrieb dargestellt, der Netzstrom läuft der Netzspannung demnach hinterher. Dabei ergibt sich ein Mischbetrieb zwischen Einspeisung in das Stromnetz und Zurückspeisung von Blindenergie aus dem Stromnetz. Während einer Spannungshalbwelle gibt es sowohl negative als auch positive Stromverläufe. Dementsprechend sind die in der Fig. 13 dargestellten Schaltzyklen der taktenden Schaltelemente S5 und S3 bzw. S2 davon abhängig, ob beispielsweise während einer positiven Spannungshalbwelle ein positiver Netzstrom (Einspeisung) oder ein negativer Netzstrom (Zurückspeisung) fließt. Dabei ergibt sich die zu übertragende Energie als das Produkt aus Netzspannung und Netzstrom, und daraus wiederum die Pulsweitenmodulation der Steuersignale.

Die Schaltzustände des ersten Schaltelements S1 und des vierten Schaltelements S4 entsprechen jenen in der Fig. 11 dargestellten. Während einer positiven Halbwelle taktet das dritte Schaltelement S3, und während einer negativen Halbwelle das zweite Schaltelement S2 invers zum fünften Schaltelement S5. Wenn dabei die Vorzeichen des Netzstromes und der Netzspannung gleich sind, beginnt ein Schaltzyklus mit dem Einschalten des fünften Schaltelements S5 (Einspeisung). Bei unterschiedlichen Vorzeichen hingegen beginnt ein Schaltzyklus mit dem Einschalten des dritten Schaltelements S3 während einer positiven Spannungshalbwelle, und mit dem Einschalten des zweiten Schaltelements S2 während einer negativen Spannungshalbwelle.

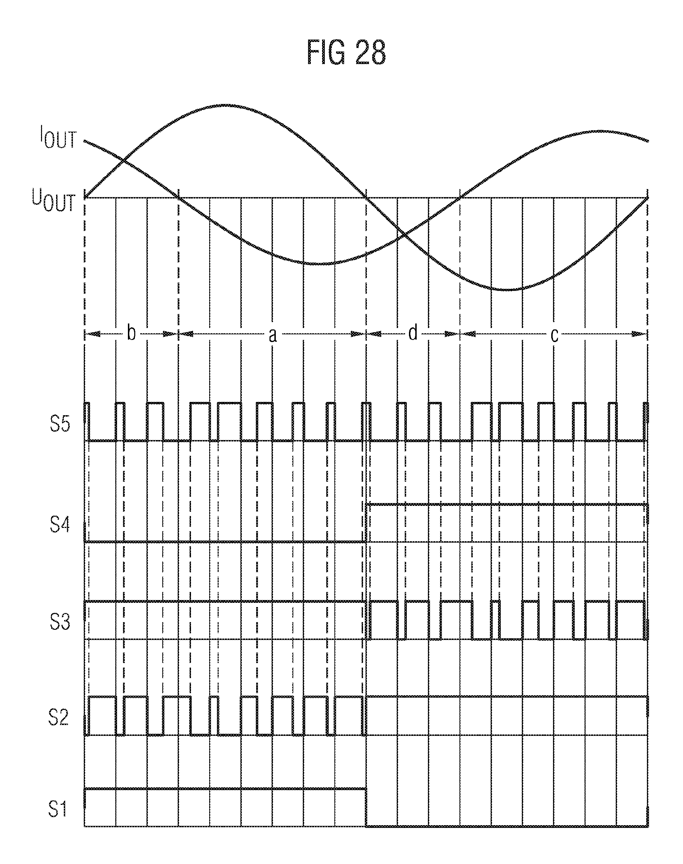

In der Fig. 28 sind die zeitlichen Verläufe bei einem Inselbetrieb mit kapazitiver Last dargestellt. Dabei läuft der Netzstrom der Netzspannung voraus. Gegenüber den in Fig. 13 dargestellten Schaltsignalverläufen ändern sich damit die Verhältnisse der Einschaltzeiten zu den Ausschaltzeiten der taktenden Schaltelemente S5, S3 bzw. S2.

Somit wird durch Optimierung der Wechselrichtertopologie in Verbindung mit dem realen Verhalten der Bauelemente eine Steigerung an Wirkungsgrad und Stromqualität bei geringeren Kosten erzielt.

## Patentansprüche

1. Wechselrichter mit einer vier Schaltelemente (S1, S2, S3, S4) aufweisenden Brückenschaltung, bei der zwei gegenüber liegende Anschlussklemmen (1, 2) der Brückenschaltung mit dem Gleichspannungsteil des Wechselrichters verbunden sind, und die beiden anderen Anschlussklemmen (3, 4) der Brückenschaltung mit dem Wechselspannungsteil des Wechselrichters verbunden sind, wobei durch geeignete Ansteuerung der Schaltelemente (S1, S2, S3, S4) Gleich- und Wechselspannung ineinander umwandelbar sind,
**dadurch gekennzeichnet, dass** im Wechselspannungsteil eine wechselspannungsseitige Induktivität (L_{S}) geschalten ist, und im Gleichspannungsteil an der positiven Gleichspannungsklemme eine gleichspannungsseitige Induktivität (L_{P}) angekoppelt ist, der ein zwischen der gleichspannungsseitigen Induktivität (L_{P}) und der Brückenschaltung in Serie geschalteter Ladekondensator (C) nachgeordnet ist, wobei in der Reihenschaltung zwischen der gleichspannungsseitigen Induktivität (L_{P}) und dem Ladekondensator (C) einerseits, sowie der negativen Gleichspannungsklemme des Gleichspannungsteils andererseits ein weiteres Schaltelement (S5) geschalten ist, das im geschlossenen Zustand die mit der positiven Gleichspannungsklemme verbundene Seite des Ladekondensators (C) mit der negativen Gleichspannungsklemme verbindet.

2. Wechselrichter mit einer vier Schaltelemente (S1, S2, S3, S4) aufweisenden Brückenschaltung, bei der zwei gegenüber liegende Anschlussklemmen (1, 2) der Brückenschaltung mit dem Gleichspannungsteil des Wechselrichters verbunden sind, und die beiden anderen Anschlussklemmen (3, 4) der Brückenschaltung mit dem Wechselspannungsteil des Wechselrichters verbunden sind, wobei durch geeignete Ansteuerung der Schaltelemente (S1, S2, S3, S4) Gleich- und Wechselspannung ineinander umwandelbar sind,
**dadurch gekennzeichnet, dass** im Wechselspannungsteil eine wechselspannungsseitige Induktivität (L_{S}) geschalten ist, und im Gleichspannungsteil an der positiven Gleichspannungsklemme ein gleichspannungsseitiges Schaltelement (S5) angekoppelt ist, dem ein zwischen dem gleichspannungsseitigen Schaltelement (S5) und der Brückenschaltung in Serie geschalteter Ladekondensator (C) nachgeordnet ist, wobei in der Reihenschaltung zwischen dem gleichspannungsseitigen Schaltelement (S5) und dem Ladekondensator (C) einerseits, sowie der negativen Gleichspannungsklemme des Gleichspannungsteils andererseits eine gleichspannungsseitige Induktivität (L_{P}) geschalten ist, die die mit der positiven Gleichspannungsklemme verbundene Seite des Ladekondensators (C) mit der negativen Gleichspannungsklemme verbindet.

3. Wechselrichter nach Anspruch 1 oder 2, **dadurch gekennzeichnet, dass** im Wechselspannungsteil ein wechselspannungsseitiger Glättungskondensator (C₀) geschalten ist.

4. Wechselrichter nach einem der Ansprüche 1 bis 3,
**dadurch gekennzeichnet, dass** im Gleichspannungsteil ein gleichspannungsseitiger Glättungskondensator (Cᵢ) geschalten ist.

5. Wechselrichter nach einem der Ansprüche 1 bis 4,
**dadurch gekennzeichnet, dass** es sich bei den Schaltelementen (S1, S2, S3, S4, S5) um Halbleiter-Schaltelemente, insbesondere um Leistungs-MOSFET oder IGBT, handelt.
